(19) Europäisches Patentamt / European Patent Office / Office européen des brevets

(11) **EP 4 546 847 A1**

(12) **EUROPEAN PATENT APPLICATION**
published in accordance with Art. 153(4) EPC

(43) Date of publication:
30.04.2025 Bulletin 2025/18

(21) Application number: 23834655.5

(22) Date of filing: 27.06.2023

(51) International Patent Classification (IPC):
H04W 16/28 (2009.01)   H04W 72/04 (2023.01)

(52) Cooperative Patent Classification (CPC):
Y02D 30/70

(86) International application number:
PCT/CN2023/102587

(87) International publication number:
WO 2024/007881 (11.01.2024 Gazette 2024/02)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
KH MA MD TN

(30) Priority: 07.07.2022 CN 202210791663

(71) Applicant: Sanechips Technology Co., Ltd.
Shenzhen, Guangdong 518055 (CN)

(72) Inventors:
• LONG, Zhijun
  Shenzhen, Guangdong 518055 (CN)
• WU, Gang
  Shenzhen, Guangdong 518055 (CN)

(74) Representative: Canzler & Bergmeier
Patentanwälte
Partnerschaft mbB
Despag-Straße 6
85055 Ingolstadt (DE)

(54) **SIGNAL TRANSMISSION METHOD AND DEVICE BASED ON MTRP**

(57) Provided in the embodiments of the present application are a signal transmission method and device based on a multiple transmission receive point (MTRP), and a computer-readable storage medium and an electronic device. The method comprises: configuring, in a resource multiplexing manner, a plurality of multiplexing resource units, which are used for performing signal transmission between an MTRP and a user equipment (UE); sending a reference signal on the plurality of multiplexing resource units at a sending end according to at least one configured beam group, wherein each multiplexing resource unit is allocated with an identifier which is used for identifying a beam group that sends the reference signal on the multiplexing resource unit; and performing beam measurement at a receiving end on the basis of the received reference signal, selecting an optimal beam group between the MTRP and the UE according to the beam measurement result, and feeding the identifier of the optimal beam group back to the sending end.

Configure, by means of resource multiplexing, a plurality of multiplexing resource units which are configured for performing signal transmission between MTRPs and a UE — S302

Send, at a transmitting end, a reference signal on the plurality of multiplexing resource units according to at least one configured beam group, with each multiplexing resource unit allocated with an identification for identifying a beam group that sends the reference signal on the multiplexing resource unit — S304

Perform, at a receiving end, beam measurement based on the received reference signal, select an optimal beam group between the MTRPs and the UE according to a result of the beam measurement, and feed back an identification of the optimal beam group to the transmitting end — S306

FIG. 3

EP 4 546 847 A1

## Description

CROSS REFERENCE TO RELATED APPLICATIONS

This application claims the priority to Chinese Patent Application No.202210791663.4 filed on July 7, 2022, which is hereby incorporated by reference in its entirety.

TECHNICAL FIELD

Embodiments of the present disclosure relate to the field of communications, and in particular, to a signal transmission method and device based on Multiple Transmission Reception point (MTRP).

BACKGROUND

Beamforming is one of the key techniques for improving signal transmission quality in a wireless communication system, and is also an important characteristic of a 5G New Radio (NR) system. In order to further meet the requirements of the International Telecommunication Union-International Mobile Telecommunications-Advanced (ITU IMT-Advanced) on system performance and capacity, the MTRP technique has been introduced into the 5G NR. The MTRP technique can realize parallel transmission of data streams, thereby further improving the signal transmission quality. Then, how to effectively perform beamforming based on an MTRP system becomes one of the key techniques for improving the 5G NR system.

In the MTRP-based beamforming, since there are a plurality of Transmission Reception points (TRPs) and each reception point (access point) is provided with a plurality of antennas, the beamforming originally based on a plurality of antennas of a single TRP is extended to that of a plurality of TRPs, such that the number of antennas participating in the beamforming becomes larger, and grouping characteristics of the antennas become more complex. How to reasonably perform beamforming based on MTRP and achieve effective signal transmission to improve the signal transmission quality is a problem to be solved by the present disclosure.

SUMMARY

Embodiments of the present disclosure provide a signal transmission method and device based on MTRP for at least solve the problem in the related art that beamforming cannot be reasonably performed based on MTRP.

According to an embodiment of the present disclosure, there is provided a signal transmission method based on MTRP, including: configuring, by means of resource multiplexing, a plurality of multiplexing resource units which are configured for performing signal transmission between multiple transmission reception points (MTRP) and a user equipment (UE); at a transmitting end, sending a reference signal on the plurality of multiplexing resource units according to at least one configured beam group, wherein each multiplexing resource unit is allocated with an identification for identifying a beam group that sends the reference signal on the multiplexing resource unit; and at a receiving end, performing beam measurement based on the received reference signal, selecting an optimal beam group between the MTRPs and the UE according to a result of the beam measurement, and feeding back an identification of the optimal beam group to the transmitting end.

In an exemplary embodiment, the operation of configuring the plurality of multiplexing resource units includes: multiplexing K Physical Downlink Shared Channels (PDSCHs) to K frequency domain resource units that do not overlap by means of Frequency Division Multiplexing, or multiplexing the K PDSCHs to K time domain resource units that do not overlap by means of Time Division Multiplexing, or multiplexing the K PDSCHs to K space division resource units by means of Space Division Multiplexing, wherein K is an integer greater than 1.

In an exemplary embodiment, the operation of sending the reference signal on the plurality of multiplexing resource units according to the at least one configured beam group includes: sending, at the ends of MTRP (MTPR ends) and according to the at least one configured beam group, a Channel State Information-Reference Signal (CSI-RS) on the K frequency domain resource units, or on the K time domain resource units, or on the K space division resource units.

In an exemplary embodiment, the operation of performing beam measurement based on the received reference signal includes: for M*N beams of each Transmission Reception point (TRP) adopting Frequency Division Multiplexing or Time Division Multiplexing in a downlink direction, at the end of UE (UE end), performing beam measurement for a total of L! *M*N*K times by traversal search on K multiplexing resource units, and performing beam measurement for a total of M*N*K times by independent search in each multiplexing resource unit, wherein L is a number of TRPs included in the MTRPs, M is a number of antenna panels of each of the TRPs, N is a number of antennas on each of the antenna panels, L, M, and N are all integers greater than or equal to 1, and L! is a factorial of L.

According to another embodiment of the present disclosure, there is provided a signal transmission device based on Multiple Transmission Reception point (MTRP), including: a configuration module configured to configure, by means of resource multiplexing, a plurality of multiplexing resource units which are configured for performing signal transmission between multiple transmission reception points (MTRP) and a user equipment (UE); a sending module configured to send, at a transmitting end, a reference signal on the plurality of multiplexing resource units according to at least one configured beam group, wherein each multiplexing resource unit is allocated with an identification for identifying a beam group that sends the reference signal on the multiplexing resource unit; and a measurement module configured to perform, at a receiving end, beam measurement based on the received reference signal, select an optimal beam group between the MTRP and the UE according to a result of the beam measurement, and feed back an identification of the optimal beam group to the transmitting end.

According to still another embodiment of the present disclosure, there is provided a computer-readable storage medium having a computer program stored therein, wherein the computer program is configured to perform, when being run, operations in any one of the above method embodiments.

According to still another embodiment of the present disclosure, there is provided an electronic device, the electronic device includes a memory and a processor, wherein the memory stores a computer program, and the processor is configured to execute the computer program to implement the operations in any one of the above method embodiments.

BRIEF DESCRIPTION OF DRAWINGS

FIG. 1 is a schematic structural diagram of a communication system architecture according to an embodiment of the present disclosure;
FIG. 2 is a block diagram of a hardware structure of a mobile terminal according to an embodiment of the present disclosure;
FIG. 3 is a flowchart illustrating a signal transmission method based on MTRP according to an embodiment of the present disclosure;
FIG. 4 is a flowchart of a beamforming process of MTRP in an idle mode according to a scenario embodiment of the present disclosure;
FIG. 5 is a flowchart of a downlink beamforming process of MTRP in a connected mode according to a scenario embodiment of the present disclosure;
FIG. 6 is a flowchart of an uplink beamforming process of MTRP in a connected mode according to a scenario embodiment of the present disclosure;
FIG. 7 is a flowchart of a Hybrid Automatic Repeat Request (HARQ) process according to an embodiment of the present disclosure;
FIG. 8 is a block diagram of a signal transmission device based on MTRP according to an embodiment of the present disclosure; and
FIG. 9 is a block diagram of a signal transmission device based on MTRP according to another embodiment of the present disclosure.

DETAIL DESCRIPTION OF EMBODIMENTS

The present disclosure will be described in detail below in conjunction with embodiments with reference to the accompanying drawings.

It should be noted that the terms "first", "second" and the like in the description, claims and drawings of the present disclosure are used to distinguish similar objects, and are not necessarily used to describe a particular order or sequence.

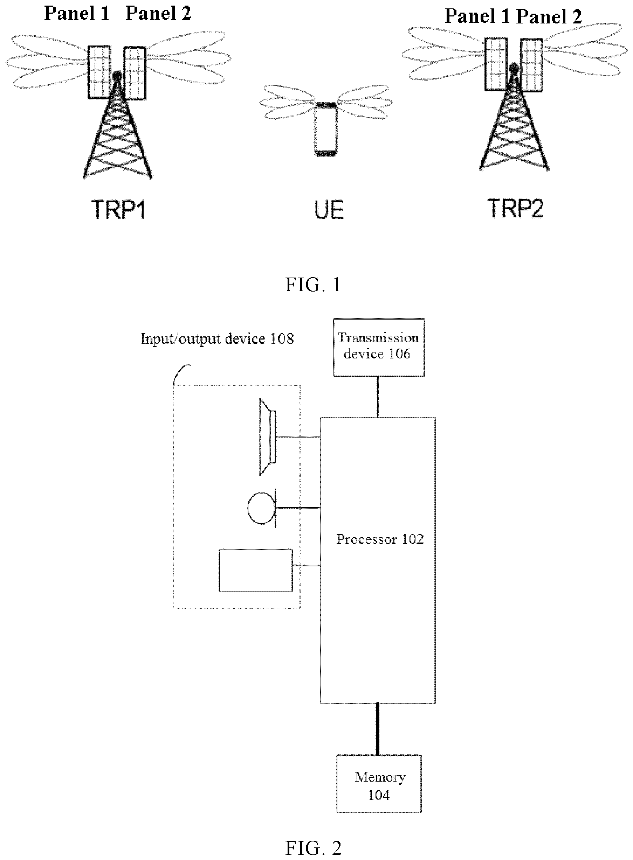

The embodiments of the present disclosure may be implemented in a communication system architecture shown in FIG. 1. As shown in FIG. 1, the communication system architecture includes: a first TRP TRP1, a second TRP TRP2, a user equipment UE, and panels (including panel 1 and panel 2). TRP1 and TRP2 jointly perform downlink beamforming for the UE. Each of TRP1 and TRP2 is provided with two antenna panels, which jointly form beams from the TRPs to the UE. The UE is provided with one panel antenna for forming a plurality of beams to perform uplink beamforming for TRP1 and TRP2. It should be understood by those of ordinary skill in the art that the number of panels and the number of antennas of the TRPs and the number of panels and the number of antennas of the UE shown in FIG. 1 are exemplary only, and the TRPs and the UE can be extended to have more panels and antennas according to the respective capabilities.

The method embodiments of the present disclosure may be implemented in a mobile terminal, a computer terminal or a similar computing device. A case where the method embodiments of the present disclosure are implemented in the mobile terminal is taken as an example. FIG. 2 is a block diagram of a hardware structure of a mobile terminal according to an embodiment of the present disclosure. As shown in FIG. 2, the mobile terminal may include one or more processors 102 (merely one processor 102 is shown in FIG. 2, and the processor 102 may include, but is not limited to, a processing device such as a microprocessor (e.g., a Microcontroller Unit (MCU)) or a programmable logic device (e.g., a Field Programmable Gate Array (FPGA))), and a memory 104 configured to store data. The mobile terminal may further include a transmission device 106 for implementing a communication function and an input/output device 108. It should be understood by those of ordinary skill in the art that the structure shown in FIG. 2 is merely for illustration and is not intended to limit the structure of the mobile terminal. For example, the mobile terminal may include more or fewer components than those shown in FIG. 2, or may have a configuration different from that shown in FIG. 2.

The memory 104 may be configured to store computer programs, such as software programs and modules of application software. For example, the memory 104 may store computer programs corresponding to the method embodiments of the present disclosure. By executing the computer programs stored in the memory 104, the processor 102 performs various functional applications and data processing, that is, implementing the method described above. The memory 104 may include a high-speed random access memory, and may also include a non-transitory memory, such as one or more magnetic memorys, flash memories, or other non-transitory solid-state memories. In some examples, the memory 104 may further include a memory remotely arranged relative to the processor 102, and the remote memory may be connected to the mobile terminal via network. Examples of the network include, but are not limited to, the Internet, an intranet, a local area network, a mobile communication network, and the combinations thereof.

The transmission device 106 is configured to receive or transmit data via a network. The specific examples of the network may include a wireless network provided by a communication provider of the mobile terminal. In an example, the transmission device 106 includes a Network Interface Controller (NIC), which may be connected to other network devices via a base station so as to communicate with the Internet. In another example, the transmission device 106 may be a Radio Frequency (RF) module, which is configured to communicate with the Internet in a wireless manner.

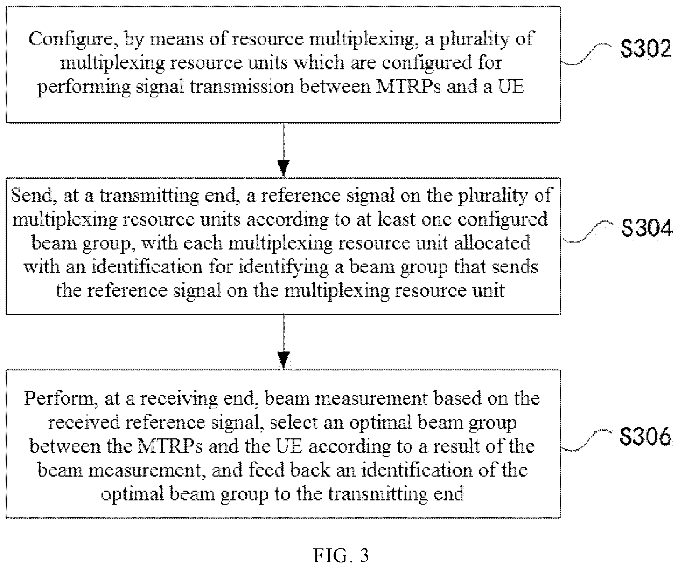

An embodiment of the present disclosure provides an MTRP-based beamforming method applicable in the above communication system architecture. FIG. 3 is a flowchart illustrating a signal transmission method based on MTRP according to an embodiment of the present disclosure. As shown in FIG. 3, the method includes the following operations S302, S304, and S306.

At operation S302, a plurality of multiplexing resource units, which are configured for performing signal transmission between multiple transmission reception points (MTRP) and a user equipment (UE), are configured by means of resource multiplexing.

For example, the MTRPs of the 5G NR can realize parallel transmission of signals in downlink and uplink directions through a plurality of resource multiplexing modes. These resource multiplexing modes may include Frequency Division Multiplexing (FDM), Time Division Multiplexing (TDM), and Space Division Multiplexing (SDM).

Therefore, in the present embodiment, in a downlink direction (i.e., the direction from the MTRPs to the UE), K Physical Downlink Shared Channels (PDSCHs) may be multiplexed, by means of FDM, to K frequency domain resource units that do not overlap (with each other), or the K PDSCHs may be multiplexed, by means of TDM, to K time domain resource units that do not overlap, or the K PDSCHs may be multiplexed, by means of SDM, to K space division resource units, with K being an integer greater than 1.

Similarly, in an uplink direction (i.e., the direction from the UE to the MTRPs), K Physical Uplink Shared Channels (PUSCHs) may be multiplexed, by means of FDM, to K frequency domain resource units that do not overlap, or the K PUSCHs may be multiplexed, by means of TDM, to K time domain resource units that do not overlap, or the K PUSCHs may be multiplexed, by means of SDM, to K space division resource units.

At operation S304, a reference signal is sent at a transmitting end on the plurality of multiplexing resource units according to at least one configured beam group, with each multiplexing resource unit allocated with an identification for identifying the beam group that sends the reference signal on the multiplexing resource unit.

In the present embodiment, in the downlink direction, the transmitting end is the MTRP ends, and the receiving end is the UE end; and in the uplink direction, the transmitting end is the UE end, and the receiving end is the MTRP ends.

In the present embodiment, for the downlink direction, at the MTRP ends (MTRPs), a Channel State Information-Reference Signal (CSI-RS) for downlink beams may be sent according to beam group configuration on the K frequency domain resource units, or on the K time domain resource units, or on the K space division resource units.

For the uplink direction, at the UE end, a Sounding Reference Signal (SRS) for uplink beams may be sent according to beam group configuration on the K frequency domain resource units, or on the K time domain resource units, or on the K space division resource units.

In addition, in the present embodiment, independent ID numbers may be allocated to the respective resource blocks (units) of the corresponding multiplexing mode to distinguish between different beams.

At operation S306, at the receiving end, beam measurement is performed based on the received reference signal, an optimal beam group between the MTRPs and the UE is selected according to a result of the beam measurement, and an identification of the optimal beam group is fed back to the transmitting end.

For convenience of understanding, it is assumed in the present embodiment that the MTRPs include L TRPs, each TRP is provided with M antenna panels each having N antennas; the UE supports multi-beam connection, and is provided with P antenna panels each having Q antennas. Then, the maximum number of formable beams in the downlink direction is L*M*N, and the maximum number of formable beams in the uplink direction is P*Q.

At this operation, in the downlink direction, the UE may perform beam scanning based on the CSI-RS first, and then perform beam measurement on the different resource blocks of the corresponding multiplexing mode by means of overall search and partial search.

In other words, at this operation, performing beam measurement based on the received reference signal at the receiving end includes: at the UE end, for the downlink direction, for the M*N beams of each TRP adopting FDM or TDM in the downlink direction, performing beam measurement for L! *M*N*K times by traversal search on the K multiplexing resource units, and performing beam measurement for M*N*K times by independent search in each multiplexing resource unit, with L! being a factorial of L.

In the uplink direction, for the P*Q beams transmitted by the UE, beam measurement is performed for a total of P*Q*K times by traversal search on the K multiplexing resource units, and beam measurement is performed for a total of P*Q times by independent search in each multiplexing resource unit.

In the present embodiment, selection of the optimal beam group is performed after the beam measurement.

For the downlink direction, it is possible to accumulate the $i^{th}$ combination of beam measurement values $W_{1i}$, $W_{2i}$, ... $W_{Li}$ of $TRP_1$, $TRP_2$ ... $TRP_L$; and if the obtained accumulation value is the maximum accumulation value among all combinations (L! combinations) of beam measurement values of $TRP_1$, $TRP_2$ ... $TRP_L$, the L beams corresponding to this combination of beam measurement values are selected as (the group of) optimal beams of $TRP_1$, $TRP_2$ ... $TRP_L$, where $TRP_1$, $TRP_2$ ... $TRP_L$ denoting the L TRPs included in or consisting the MTRPs, and $1 \leq i \leq L!$.

For the uplink direction, it is possible to select, based on the measurement values of beams received by the TRP, one optimal beam for the TRP.

In the present embodiment, after the selection of the optimal beam group is performed, an operation of reporting the optimal beams is performed.

For the selected optimal beams in the downlink direction, the UE may feed back the identifications of the selected L optimal beams to the MTRPs. For the selected optimal beam in the uplink direction, each TRP feeds back the identification of the selected optimal beam to the UE.

In the present embodiment, after the beamforming between the MTRPs and the UE is completed, if transmission quality of the beams deteriorates in a Hybrid Automatic Repeat Request (HARQ) process, beam switching may be performed among a plurality of beams in the selected optimal beam group to select a beam satisfying signal transmission quality requirement, and performing data retransmission or feedback with the selected beam, so as to improve the transmission quality.

In the above embodiment of the present disclosure, a plurality of multiplexing resource units for signal transmission between the MTRPs and the UE are configured by means of resource multiplexing, the transmitting end sends a reference signal on the plurality of multiplexing resource units according to the configured beam group, and the receiving end performs beam measurement based on the received reference signal, and selects the optimal beam group between the MTRPs and the UE according to the result of beam measurement. In this way, the technical problem in the related art that beamforming cannot be reasonably performed in a plurality of resource multiplexing modes of the MTRPs is solved, and an effect of improving signal transmission quality while achieving effective signal transmission is obtained.

The technical solutions provided in the embodiments of the present disclosure can be applied to MTRP devices and UE chips in the 5G NR, the MTRPs may be base stations (gNBs), Relays or various Access Points (APs), and the UE may be any terminal access device such as a mobile phone, a Customer Premise Equipment (CPE) or a computer.

In order to facilitate the understanding of the technical solutions provided in the present disclosure, the technical solutions provided in the present disclosure will be described in detail with reference to specific scenario embodiments below.

The MTRPs of the 5G NR can realize parallel transmission of signals in the downlink and uplink directions in a plurality of resource multiplexing modes including FDM, TDM, and SDM. On the other hand, the beamforming process of a 5G NR system is completed through a series of stages of beam management including beam scanning, beam measurement, beam selection, and beam reporting.

Scenario Embodiment One

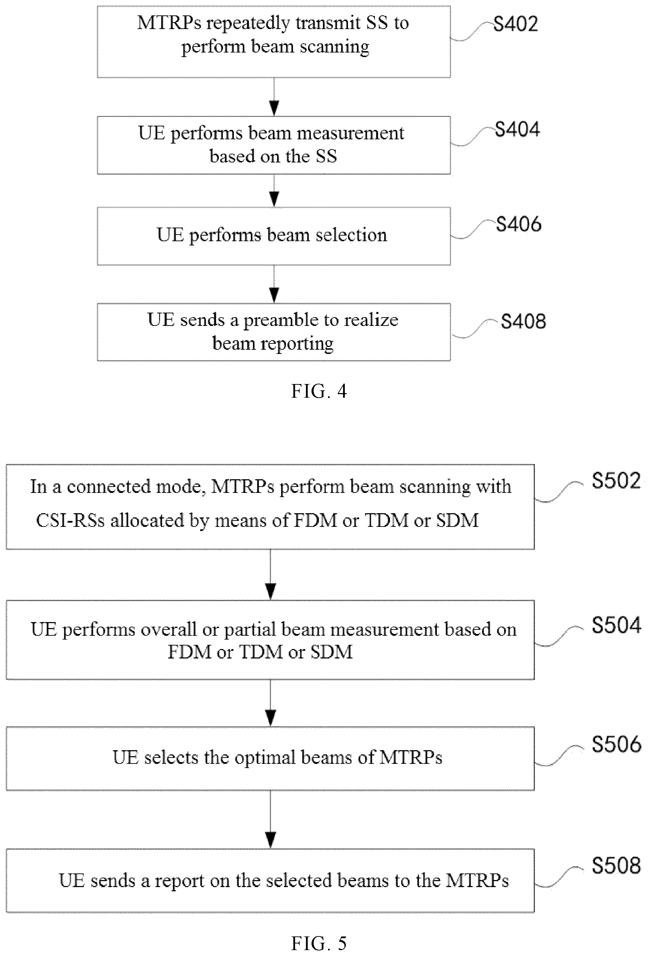

FIG. 4 is a flowchart of a beamforming process of MTRPs in an idle mode according to a scenario embodiment of the present disclosure. As shown in FIG. 4, the beamforming process includes the following operations S402, S404, S406, and S408.

At operation S402, the MTRPs repeatedly transmit a synchronization signal (SS) to perform beam scanning.

In the stage of initial access, the MTRPs perform beam scanning by repeatedly transmitting the SS (SS burst) in predetermined directions (represented as beams) at a certain time interval. The basic signal of an SS is a Synchronization Signal Block (SSB) containing a Primary Synchronization Signal (PSS), a Secondary Synchronization Signal (SSS), and a Physical Broadcast Channel (PBCH) signal; and the period of the repeated transmissions may be set according to system transmission requirements. After the UE initially accesses the MTRPs, the UE synchronizes with the MTRPs and receives system information broadcast. If the UE is in an idle mode after accessing the MTRPs, the MTRPs continue to perform beam scanning by repeated transmission of the SS.

At operation S404, the UE performs beam measurement based on the SS.

At operation S406, the UE and the MTRPs perform beam selections.

At operation S408, the UE sends a preamble to realize beam reporting.

In the idle mode, based on one or more predefined direction sets of Physical Random Access Channels (PRACHs) relative to the SSB, the UE, after selecting the SSB of one TRP, transmits the preamble of the PRACH(s) on the beam of the selected direction. The information of the PRACH(s) relative to the SSB is issued by the MTRPs to the UE through system messages, and has a corresponding relationship with the SSB and the PBCHs.

Scenario Embodiment Two

In this Scenario Embodiment, the UE initially accesses the MTRPs and synchronizes with the MTRPs, and receives system information broadcast. The UE is in a connected mode after accessing the MTRPs. FIG. 5 is a flowchart of a downlink beamforming process of MTRPs in the connected mode according to a scenario embodiment of the present disclosure. As shown in FIG. 5, the downlink beamforming process includes the following operations S502, S504, S506 and S508.

At operation S502, the MTRPs perform beam scanning with CSI-RSs.

The CSI-RSs are adopted for beam scanning in the downlink direction, and the CSI-RSs belong to the same CSI-RS set.

Assuming that the MTRPs of the 5G NR include L TRPs and each TRP is provided with M antenna panels each having N antennas, the maximum number of formable beams is L*M*N; and assuming that the UE supports multi-beam connection and is provided with P antenna panels each having Q antennas, the maximum number of formable beams is P*Q. During the downlink beam scanning, the CSI-RSs are associated with K multiplexing resource blocks, and the K multiplexing resource blocks are allocated with independent identifications (IDs) to distinguish between different beams.

For Frequency Division Multiplexing (FDM) of the MTRPs, during the downlink beam scanning, assuming that the FDM of the MTRPs refers to transmitting K PDSCH data through K frequency domain resource blocks that do not overlap, the CSI-RSs may be associated with the K frequency domain resource blocks, and the K frequency domain resource blocks may be then allocated with independent IDs to distinguish between different beamforming processes.

For Time Division Multiplexing (TDM) of the MTRPs, during the downlink beam scanning, assuming that the TDM of the MTRPs refers to transmitting K PDSCHs through K time domain resource blocks that do not overlap, the CSI-RSs may be associated with the K time domain resource blocks, and the K time domain resource blocks may be then allocated with independent IDs to distinguish between different beams.

For Space Division Multiplexing (SDM) of the MTRPs, during the downlink beam scanning, assuming that the SDM of the MTRPs refers to transmitting K PDSCHs through K space division regions (which, at this time, are overlapped time domain resource blocks), the CSI-RSs may be associated with the K space division regions, and the K space division regions may be then allocated with independent IDs to distinguish between different beamforming processes.

At operation S504, the UE performs beam measurement based on the CSI-RSs.

After entering the connected mode, search and measurement in the downlink direction are performed based on the CSI-RSs of the MTRPs. For FDM and TDM of the MTRPs, two modes, i.e., an overall search mode and a partial search mode, are adopted.

In the overall search mode, for the M*N beams of each TRP in the downlink direction, the corresponding K resource blocks need to be subjected to traversal search and measurement, thereby beam measurement is performed for L! *M*N*K times, with L! being a factorial of L and denoting the possible number of groups for the L TRPs corresponding to the K resource blocks.

In the partial search mode, for the L*M*N beams in the downlink direction, independent search and measurement are performed in the corresponding K resource blocks, thereby beam measurement is performed for L*M*N times.

For the SDM in the downlink direction, since both the space division multiplexing and the beamforming are carried out in the spatial domain, there is no difference between the overall search mode and the partial search mode, and beam measurement is performed for L*M*N times in the downlink direction.

The overall search mode can obtain finer measurement values than the partial search mode while the partial search mode consumes less signaling overhead and took shorter search time than the overall search mode, so that the overall search mode and the partial search mode can be applied to their suitable scenarios, respectively.

At operation S506, the UE performs beam selection.

During the downlink beamforming, the UE periodically searches for the optimal downlink beam according to measurement results of the CSI-RSs. The downlink beams are selected and determined by the UE. Assuming that in the mode of FDM or TDM, for frequency or time units 1 to L, the beam measurement values of TRP_1, TRP_2 ... TRP_L of the $i^{th}$ combination among the L! combinations are $W_{1i}$, $W_{2i}$, ... $W_{Li}$, all the measurement values of the $i^{th}$ combination are accumulated to obtain

$$\sum_{l=1}^{L} W_{li}$$

, and the maximum accumulation value is selected from the possible L! combinations, and the selected accumulation value represents the corresponding combination of the L TRPs selected by the UE.

At operation S508, the UE sends L beam reports to the MTRPs.

In the connected mode, for the downlink beamforming, the UE may feed back reports of the L beams selected based on the measurement results of the CSI-RSs to the L TRPs.

Scenario Embodiment Three

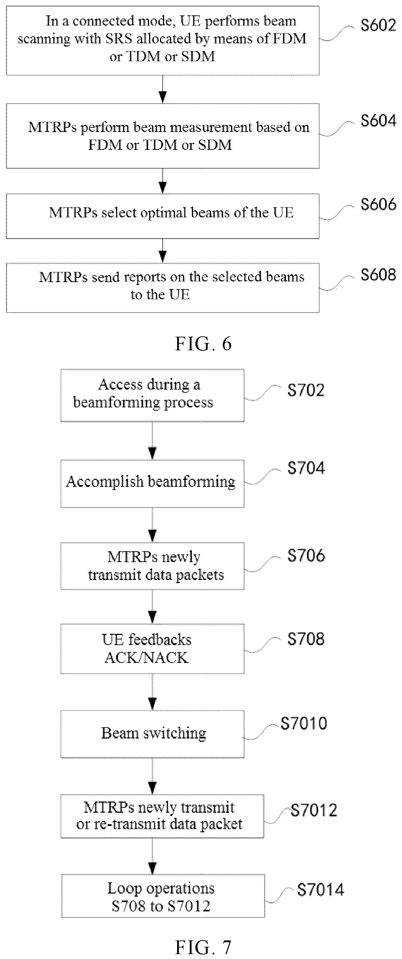

The UE initially accesses the MTRPs and synchronizes with the MTRPs, and receives system information broadcast. The UE is in a connected mode after accessing the MTRPs. FIG. 6 is a flowchart of an uplink beamforming process of MTRPs in a connected mode according to a scenario embodiment of the present disclosure. As shown in FIG. 6, the uplink beamforming process includes the following operations S602, S604, S606, and S608.

At operation S602, the UE performs beam scanning with SRSs.

The SRSs are adopted for beam scanning in the uplink direction, and the SRSs belong to the same SRS set.

During the uplink beam scanning, assuming that the FDM of the UE refers to transmitting K PUSCH data through K frequency domain resource blocks that do not overlap, the SRSs may be associated with the K frequency domain resource blocks, and the K frequency domain resource blocks may be then allocated with independent IDs to distinguish between different beams.

During the uplink beam scanning, assuming that the TDM of the UE refers to transmitting K PUSCHs through K time domain resource blocks that do not overlap, the SRSs may be associated with the K time domain resource blocks, and the K time domain resource blocks may be then allocated with independent IDs to distinguish between different beams.

During the uplink beam scanning, assuming that the SDM of the UE refers to transmitting K PUSCHs through K space division regions (which, at this time, are overlapped time domain resource blocks), the SRSs may be associated with the K space division regions, and the K space division regions may be then allocated with independent IDs to distinguish between different beams.

At operation S604, the MTRPs perform beam measurement based on the SRSs.

After entering the connected mode, search and measurement in the uplink direction are performed based on the SRSs of the UE. For FDM and TDM, two modes, i.e., an overall search mode and a partial search mode, are adopted.

In the overall search mode, for the P*Q beams of the UE in the uplink direction, the corresponding K multiplexing resource blocks need to be subjected to traversal search and measurement, thereby beam measurement is performed for a total P*Q*K times.

In the partial search mode, for the P*Q beams in the uplink direction, independent search and measurement are performed in the corresponding K multiplexing resource blocks, thereby performing beam measurement for a total of P*Q times.

For SDM in the uplink direction, since both the space division multiplexing and the beamforming are carried out in the spatial domain, there is no difference between the overall search mode and the partial search mode, and beam measurement is performed for a total of P*Q times in the uplink direction. However, it should be known by those of ordinary skill in the art that beam measurement may be performed for the SDM by a combination of the overall search mode and the partial search mode, which is not particularly limited herein.

The overall search mode can obtain finer measurement values than the partial search mode while the partial search mode consumes less signaling overhead and shorter search time than the overall search mode, so that the overall search mode and the partial search mode can be applied to respective suitable scenarios.

At operation S606, the MTRPs perform beam selection by measuring the SRSs.

During the uplink beamforming, the MTRPs determines the optimal uplink beams based on a selection criteria that: one optimal uplink beam is selected based on measurement values of the P*Q beams received by each TRP from the UE.

At operation S608, the MTRPs perform beam reporting to the UE.

For the uplink beamforming, each TRP may feed back one optimal beam report to the UE, the optimal beam being selected based on the measurement results of the SRSs.

After performing transmission with the L beams selected based on the plurality of multiplexing modes of the MTRPs, the beamforming process will be continuously updated as the propagation environment changes. In order to improve signal transmission quality, the Hybrid Automatic Repeat Request (HARQ) processes of the MTRPs in the uplink and downlink directions may be switched among the L beams with the update of the beams, so as to improve the transmission quality by selecting a suitable beam for retransmission and feedback. The HARQ includes retransmission and/or ACK/NACK feedback for error packet data. FIG. 7 illustrates a specific HARQ process, and the processing of the HARQ process in the uplink direction is similar to that in the downlink direction. The HARQ process includes the following operations S702 to S7012.

Operation S702: access during a beamforming process.

The UE successfully accesses the MTRPs.

Operation S704: beamforming in the connected mode.

A beamforming process is performed in the connected mode based on the plurality of resource multiplexing modes, thereby completing the beamforming in the connected mode. The UE prepares to send packets to the MTRPs.

Operation S706: transmission of a new packet by the MTRPs.

The MTRPs transmit a new packet (i.e., the packet sent for the first time) to the UE.

Operation S708: feedback of ACK/NACK by the UE.

The UE detects the received packet. If the detection result is correct, the UE sends the feedback of ACK. If the detection result is wrong, the UE sends the feedback of NACK.

Operation S7010: beam switching.

After the MTRPs receive the feedback of ACK or NACK from the UE, the MTRPs perform a beamforming process based on the plurality of resource multiplexing modes to realize beam switching. The beamforming process may be continuously updated as the propagation environment changes, and the MTRPs can accomplish beam switching by the beamforming process based on the plurality of resource multiplexing modes.

Operation S7012: transmission of a new packet or retransmission of the sent packet by the MTRPs.

If the feedback received by the MTRPs from the UE is ACK, the MTRPs transmit a new (second transmission) packet on a beam selected by the beam switching; and if the feedback received by the MTRPs from the UE is NACK, the MTRPs retransmit the packet sent in the first transmission process on the beam selected by the beam switching.

Operation S7014: cyclically performing operations S708 to S7012.

When operations S708 to S7012 are cyclically performed, if the feedback is NACK all the time, the MTRPs stop retransmitting the packet when the number of NACKs reaches the maximum retransmission times.

The method provided in the above embodiments can be applied to MTRP devices and UE chips in the 5G NR, the MTRPs may be base stations (gNBs), Relays or various APs, and the UE may be any terminal access device such as a mobile phone, a CPE or a computer.

The method provided in the above embodiments has the following advantages: the beamforming and the HARQ process can be performed in various resource multiplexing modes; the resource multiplexing, the beamforming, and the HARQ process can be performed in a unified way; the beam management and the HARQ process which are matched with each other can be performed in time according to actual situations of the multiplexing modes; realizing selection of optimal beams in the resource multiplexing modes can be selected, and improvement of transmission quality.

In the method provided in the above embodiments, the various resource multiplexing modes (e.g., FDM, TDM, and SDM) of the MTRPs can also be independent of the beamforming of the MTRPs, and can also be independent of the HARQ process. However, the combination of the various resource multiplexing modes, the beamforming, and the HARQ process can produce a better comprehensive effect.

Through the above description of the embodiments, those of ordinary skill in the art can understand clearly that the method according to the above embodiments may be implemented by software together with a necessary general-purpose hardware platform, and may be also implemented by hardware, but the former is better in many cases. Based on such understanding, the technical solutions of the present disclosure or a part of the technical solutions of the present disclosure which contributes to the existing technology may be implemented in a form of a software product. The computer software product is stored in a storage medium (such as a Read-Only Memory (ROM)/Random Access Memory (RAM), a magnetic disk or an optical disc), and includes several instructions such as query instructions, status information processing and summarizing may exist in a relay program, storage medium or device, and instruction sending and status information feedback may be performed in a relay manner.

A signal transmission device based on MTRP is further provided in the present embodiment, and is configured to implement the above embodiments and preferable implementations, and what is described above will not be repeated here. The term "module" or "unit" used below refers to software, hardware, or a combination of software and hardware that can perform predetermined functions. Although the device described in the following embodiment is preferably implemented by software, the implementations of the device by hardware or a combination of software and hardware are possible and can be conceived.

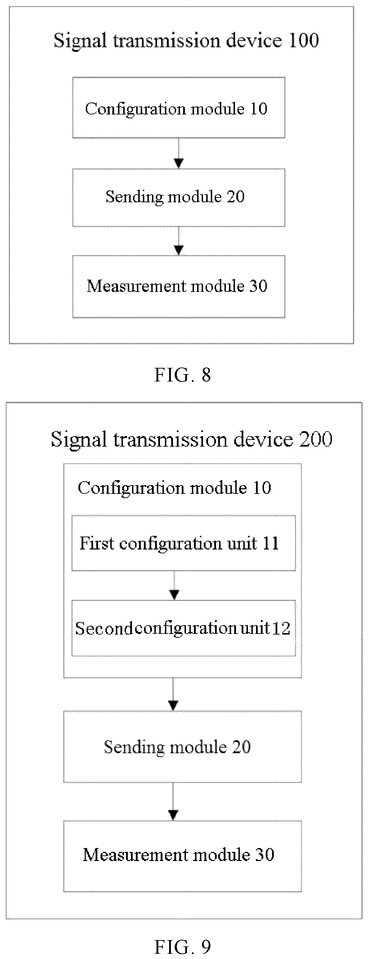

FIG. 8 is a block diagram of a signal transmission device based on MTRP according to an embodiment of the present disclosure, and a signal transmission device 100 may be located on MTRPs or a UE or other electronic devices. As shown in FIG. 8, the signal transmission device 100 may include a configuration module 10, a sending module 20, and a measurement module 30.

The configuration module 10 is configured to configure, by means of resource multiplexing, a plurality of multiplexing resource units which are configured for performing signal transmission between MTRPs and a UE.

The sending module 20 is configured to send, at a transmitting end, a reference signal on the plurality of multiplexing resource units according to at least one configured beam group, with each multiplexing resource unit allocated with an identification for identifying a beam group that sends the reference signal on the multiplexing resource unit.

The measurement module 30 is configured to perform, at a receiving end, beam measurement based on the received reference signal, select an optimal beam group between the MTRPs and the UE according to a result of the beam measurement, and feed back an identification of the optimal beam group to the transmitting end.

FIG. 9 is a block diagram of a signal transmission device based on MTRP according to another embodiment of the present disclosure. As shown in FIG. 9, the signal transmission device 200 includes all the modules described in the above embodiment, while the configuration module 10 further includes a first configuration unit 11 and a second configuration unit 12.

The first configuration unit is configured to multiplex K PDSCHs to K frequency domain resource units that do not overlap by means of FDM, or multiplex the K PDSCHs to K time domain resource units that do not overlap by means of TDM, or multiplex the K PDSCHs to K space division resource units by means of SDM, with K being an integer greater than 1.

The second configuration unit is configured to multiplex K PUSCHs to K frequency domain resource units that do not overlap by means of FDM, or multiplex the K PUSCHs to K time domain resource units that do not overlap by means of TDM, or multiplex the K PUSCHs to K space division resource units by means of SDM, with K being an integer greater than 1.

In the present embodiment, the sending module 20 is further configured to send a CSI-RS according to the at least one configured beam group on the K frequency domain resource units, or on the K time domain resource units, or on the K space division resource units. The measurement module 30 is further configured to perform, at the UE end and for M*N beams of each TRP adopting FDM or TDM in the downlink direction, beam measurement for a total L!*M*N*K times by traversal search on the K multiplexing resource units, and perform beam measurement for a total of M*N*K times by independent search in each multiplexing resource unit, with L being the number of TRPs included in the MTRPs, M being the number of antenna panels of each TRP, N being the number of antennas on each antenna panel, L, M, and N being integers greater than or equal to 1, and L! being a factorial of L.

It should be noted that each of the above modules may be implemented by software or hardware, and when implemented by hardware, the modules may be implemented in a following way: all the modules are located in a same processor; or the modules are randomly combined and located in different processors. However, the implementation of the above modules is not limited thereto.

An embodiment of the present disclosure further provides a computer-readable storage medium storing a computer program, and the computer program is configured to implement, when being executed, the operations in any one of the above method embodiments.

In an exemplary embodiment, the above computer-readable storage medium may include, but is not limited to, various media capable of storing the computer program, such as a Universal Serial Bus Flash Disk (a USB flash disk), a Read-Only Memory (ROM), a Random Access Memory (RAM), a mobile hard disk, a magnetic disk and an optical disc

An embodiment of the present disclosure further provides an electronic device. The electronic device includes a memory and a processor, the memory stores therein a computer program, and the processor is configured to execute the computer program to implement the operations in any one of the above method embodiments.

In an exemplary embodiment, the electronic device may further include a transmission device connected to the processor, and an input/output device connected to the processor.

Reference may be made to the examples described in the above embodiments and optional implementations for specific examples of the embodiment, and thus the specific examples of the embodiment are not described in detail here.

Apparently, it should be understood by those of ordinary skill in the art that all the modules or operations of the present disclosure described above may be implemented by a general-purpose computing device, may be integrated in a single computing device or distributed on a network composed of a plurality of computing devices, and may be implemented by program codes executable by a computing device, such that the modules or operations can be stored in a memory and executed by a computing device. In some cases, the operations illustrated or described may be performed in an order different from that described herein. The modules or operations may be separately made into integrated circuit modules, or some of the modules or operations may be made into a single integrated circuit module. Thus, the present disclosure is not limited to any specific combination of hardware and software.

The description above is merely of the preferable embodiments of the present disclosure, but is not intended to limit the present disclosure. Various modifications and changes may be made to the present disclosure by those of ordinary skill in the art. Any modification, equivalent replacement and improvement made within the principle of the present disclosure should be included in the protection scope of the present disclosure.

**Claims**

1. A signal transmission method based on Multiple Transmission Reception point, MTRP, comprising:

   configuring, by means of resource multiplexing, a plurality of multiplexing resource units which are configured for performing signal transmission between multiple transmission reception points, MTRPs and a user equipment, UE;
   sending, at a transmitting end, a reference signal on the plurality of multiplexing resource units according to at least one configured beam group, wherein each multiplexing resource unit is allocated with an identification for identifying a beam group that sends the reference signal on the multiplexing resource unit; and
   performing, at a receiving end, beam measurement based on the received reference signal, selecting an optimal beam group between the MTRPs and the UE according to a result of the beam measurement, and feeding back an identification of the optimal beam group to the transmitting end.

2. The method of claim 1, wherein configuring, by means of resource multiplexing, the plurality of multiplexing resource units which are configured for performing signal transmission between the MTRPs and the UE comprises:
multiplexing K Physical Downlink Shared Channels, PDSCHs to K frequency domain resource units that do not overlap by means of Frequency Division Multiplexing, or multiplexing the K PDSCHs to K time domain resource units that do not overlap by means of Time Division Multiplexing, or multiplexing the K PDSCHs to K space division resource units by means of Space Division Multiplexing, wherein K is an integer greater than 1.

3. The method of claim 2, wherein sending, at the transmitting end, the reference signal on the plurality of multiplexing resource units according to the at least one configured beam group comprises:
sending, at MTRP ends and according to the at least one configured beam group, a Channel State Information-Reference Signal, CSI-RS on the K frequency domain resource units, or on the K time domain resource units, or on the K space division resource units.

4. The method of claim 2 or 3, wherein performing, at the receiving end, beam measurement based on the received reference signal comprises:
for $M*N$ beams of each Transmission Reception point, TRP in a downlink direction, at a UE end, performing beam measurement for a total of $L!*M*N*K$ times by traversal search on K multiplexing resource units, and performing beam measurement for a total of $M*N*K$ times by independent search in each multiplexing resource unit, wherein L is a number of TRPs included in the MTRPs, M is a number of antenna panels of each of the TRPs, N is a number of antennas on each of the antenna panels, L, M, and N are all integers greater than or equal to 1, and $L!$ is a factorial of L.

5. The method of any one of claims 1 to 4, wherein selecting the optimal beam group between the MTRPs and the UE according to the result of the beam measurement comprises:
accumulating the $i^{th}$ combination of beam measurement values $W_{1i}$, $W_{2i}$, ... $W_{Li}$ of $TRP_1$, $TRP_2$ ... $TRP_L$; and if the obtained accumulation value is the maximum accumulation value among all combinations of beam measurement values of $TRP_1$, $TRP_2$ ... $TRP_L$, L beams corresponding to the $i^{th}$ combination of beam measurement values are selected as optimal beams of $TRP_1$, $TRP_2$ ... $TRP_L$, where $TRP_1$, $TRP_2$ ... $TRP_L$ denoting L TRPs included in the MTRPs, and $1 \leq 1 \leq L!$.

6. The method of claim 5, wherein feeding back the identification of the optimal beam group to the transmitting end comprises:
feeding back, by the UE, identifications of the selected L optimal beams to the MTRPs.

7. The method of claim 1, wherein configuring, by means of resource multiplexing, the plurality of multiplexing resource units which are configured for performing signal transmission between the MTRPs and the UE comprises:
multiplexing K Physical Uplink Shared Channels, PUSCHs to K frequency domain resource units that do not overlap by means of Frequency Division Multiplexing, or multiplexing the K PUSCHs to K time domain resource units that do not overlap by means of Time Division Multiplexing, or multiplexing the K PUSCHs to K space division resource units by means of Space Division Multiplexing, wherein K is an integer greater than 1.

8. The method of claim 2, wherein sending, at the transmitting end, the reference signal on the plurality of multiplexing resource units according to the at least one configured beam group comprises:
sending, at the UE end and according to the at least one configured beam group, a Sounding Reference Signal, SRS on the K frequency domain resource units, or on the K time domain resource units, or on the K space division resource units.

9. The method of claim 8, wherein performing, at the receiving end, beam measurement based on the received reference signal comprises:
for $P*Q$ beams transmitted by the UE in an uplink direction, performing beam measurement for a total of $P*Q*K$ times by traversal search on K multiplexing resource units, and performing beam measurement for $P*Q$ times by independent search in each multiplexing resource unit, wherein P is a number of antenna panels of the UE, Q is a number of antennas on each of the antenna panels, and P and Q are integers greater than or equal to 1.

10. The method of claim 1, wherein selecting the optimal beam group between the MTRPs and the UE according to the result of the beam measurement comprises:
selecting, based on measurement values of beams received by each TRP, one optimal beam corresponding to the TRP.

11. The method of claim 10, wherein feeding back the identification of the optimal beam group to the transmitting end comprises:

feeding back, by each TRP, an identification of the selected one optimal beam to the UE.

12. The method of any one of claims 1 to 11, wherein after selecting the optimal beam group between the MTRPs and the UE according to the result of the beam measurement, the method further comprises: in a Hybrid Automatic Repeat Request, HARQ process, performing beam switching among a plurality of beams in the selected optimal beam group to select a beam satisfying signal transmission quality requirement, and performing data retransmission or feedback with the selected beam.

13. A signal transmission device based on Multiple Transmission Reception point, MTRP, comprising:

a configuration module configured to configure, by means of resource multiplexing, a plurality of multiplexing resource units which are configured for performing signal transmission between multiple transmission reception points, MTRPs and a user equipment, UE;
a sending module configured to send, at a transmitting end, a reference signal on the plurality of multiplexing resource units according to at least one configured beam group, wherein each multiplexing resource unit is allocated with an identification for identifying a beam group that sends the reference signal on the multiplexing resource unit; and
a measurement module configured to perform, at a receiving end, beam measurement based on the received reference signal, select an optimal beam group between the MTRPs and the UE according to a result of the beam measurement, and feed back an identification of the optimal beam group to the transmitting end.

14. The device of claim 13, wherein the configuration module comprises at least one of:

a first configuration unit configured to: multiplex K Physical Downlink Shared Channels, PDSCHs to K frequency domain resource units that do not overlap by means of Frequency Division Multiplexing, or multiplex the K PDSCHs to K time domain resource units that do not overlap by means of Time Division Multiplexing, or multiplex the K PDSCHs to K space division resource units by means of Space Division Multiplexing, wherein K is an integer greater than 1; or
a second configuration unit configured to multiplex K Physical Uplink Shared Channels, PUSCHs to K frequency domain resource units that do not overlap by means of Frequency Division Multiplexing, or multiplex the K PUSCHs to K time domain resource units that do not overlap by means of Time Division Multiplexing, or multiplex the K PUSCHs to K space division resource units by means of Space Division Multiplexing, wherein K is an integer greater than 1.

15. The device of claim 13, wherein

the configuration module comprises a first configuration unit, the first configuration unit being configured to multiplex K Physical Downlink Shared Channels, PDSCHs to K frequency domain resource units that do not overlap by means of Frequency Division Multiplexing, or multiplex the K PDSCHs to K time domain resource units that do not overlap by means of Time Division Multiplexing, or multiplex the K PDSCHs to K space division resource units by means of Space Division Multiplexing, wherein K is an integer greater than 1;
the sending module is further configured to send, at MTRP ends and according to the at least one configured beam group, a Channel State Information-Reference Signal, CSI-RS on the K frequency domain resource units, or on the K time domain resource units, or on the K space division resource units; and
the measurement module is further configured to perform, at the UE end and for M*N beams of each TRP adopting Frequency Division Multiplexing or Time Division Multiplexing in a downlink direction, beam measurement for a total of L!*M*N*K times by traversal search on K multiplexing resource units, and perform beam measurement for M*N*K times by independent search in each multiplexing resource unit, wherein L is a number of TRPs included in the MTRPs, M is a number of antenna panels of each of the TRPs, N is a number of antennas on each of the antenna panels, L, M, and N are all integers greater than or equal to 1, and L! is a factorial of L.

16. A non-transitory computer-readable storage medium storing a computer program which, when executed by a processor, implements the method of any one of claims 1 to 12.

17. An electronic device, comprising a memory, a processor, and a computer program stored in the memory and executable on the processor, wherein the processor when executing the computer program, implements the method of any one of claims 1 to 12.

FIG. 1

FIG. 2

Configure, by means of resource multiplexing, a plurality of multiplexing resource units which are configured for performing signal transmission between MTRPs and a UE  ⟿ S302

Send, at a transmitting end, a reference signal on the plurality of multiplexing resource units according to at least one configured beam group, with each multiplexing resource unit allocated with an identification for identifying a beam group that sends the reference signal on the multiplexing resource unit  ⟿ S304

Perform, at a receiving end, beam measurement based on the received reference signal, select an optimal beam group between the MTRPs and the UE according to a result of the beam measurement, and feed back an identification of the optimal beam group to the transmitting end  ⟿ S306

FIG. 3

| MTRPs repeatedly transmit SS to perform beam scanning | S402 |

↓

| UE performs beam measurement based on the SS | S404 |

↓

| UE performs beam selection | S406 |

↓

| UE sends a preamble to realize beam reporting | S408 |

FIG. 4

| In a connected mode, MTRPs perform beam scanning with CSI-RSs allocated by means of FDM or TDM or SDM | S502 |

↓

| UE performs overall or partial beam measurement based on FDM or TDM or SDM | S504 |

↓

| UE selects the optimal beams of MTRPs | S506 |

↓

| UE sends a report on the selected beams to the MTRPs | S508 |

FIG. 5

In a connected mode, UE performs beam scanning with SRS allocated by means of FDM or TDM or SDM — S602

MTRPs perform beam measurement based on FDM or TDM or SDM — S604

MTRPs select optimal beams of the UE — S606

MTRPs send reports on the selected beams to the UE — S608

FIG. 6

Access during a beamforming process — S702

Accomplish beamforming — S704

MTRPs newly transmit data packets — S706

UE feedbacks ACK/NACK — S708

Beam switching — S7010

MTRPs newly transmit or re-transmit data packet — S7012

Loop operations S708 to S7012 — S7014

FIG. 7

Signal transmission device 100

Configuration module 10

Sending module 20

Measurement module 30

FIG. 8

Signal transmission device 200

Configuration module 10

First configuration unit 11

Second configuration unit 12

Sending module 20

Measurement module 30

FIG. 9

**INTERNATIONAL SEARCH REPORT**

| International application No. |
| --- |
| **PCT/CN2023/102587** |

**A. CLASSIFICATION OF SUBJECT MATTER**

H04W 16/28(2009.01)i; H04W 72/04(2023.01)i

According to International Patent Classification (IPC) or to both national classification and IPC

**B. FIELDS SEARCHED**

Minimum documentation searched (classification system followed by classification symbols)

IPC:H04W

Documentation searched other than minimum documentation to the extent that such documents are included in the fields searched

Electronic data base consulted during the international search (name of data base and, where practicable, search terms used)

CNABS; CNTXT; CNKI; VEN; WOTXT; USTXT; EPTXT; IEEE: 多传输接收节点, 信道状态信息参考信号, 资源, 复用, 波束, 组, 测量, 最佳, 反馈, MTRP, CSI-RS, resource, beam, group, measurement, best, feedback, report

**C. DOCUMENTS CONSIDERED TO BE RELEVANT**

| Category* | Citation of document, with indication, where appropriate, of the relevant passages | Relevant to claim No. |
| --- | --- | --- |
| PX | CN 114885344 A (SANECHIPS TECHNOLOGY CO., LTD.) 09 August 2022 (2022-08-09) description, paragraphs [0025]-[0099] | 1-17 |
| X | CN 113543199 A (VIVO MOBILE COMMUNICATION CO., LTD.) 22 October 2021 (2021-10-22) description, paragraphs [0027]-[0144] | 1-17 |
| A | CN 110912665 A (HUAWEI TECHNOLOGIES CO., LTD.) 24 March 2020 (2020-03-24) entire document | 1-17 |
| A | WO 2022067842 A1 (APPLE INC.) 07 April 2022 (2022-04-07) entire document | 1-17 |
| A | US 2021135741 A1 (QUALCOMM INC.) 06 May 2021 (2021-05-06) entire document | 1-17 |

☐ Further documents are listed in the continuation of Box C.  ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
| --- | --- |
| **26 September 2023** | **23 October 2023** |

| Name and mailing address of the ISA/CN | Authorized officer |
| --- | --- |
| **China National Intellectual Property Administration (ISA/ CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2023/102587**

| Patent document cited in search report | | | Publication date (day/month/year) | Patent family member(s) | | | Publication date (day/month/year) |
|---|---|---|---|---|---|---|---|
| CN | 114885344 | A | 09 August 2022 | None | | | |
| CN | 113543199 | A | 22 October 2021 | None | | | |
| CN | 110912665 | A | 24 March 2020 | None | | | |
| WO | 2022067842 | A1 | 07 April 2022 | None | | | |
| US | 2021135741 | A1 | 06 May 2021 | US | 11290174 | B2 | 29 March 2022 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202210791663